# EUROPÄISCHE PATENTSCHRIFT

(11) **EP 0 453 877 B1**
(45) Veröffentlichungstag und Bekanntmachung des Hinweises auf die Patenterteilung: **26.10.1994**
(21) Anmeldenummer: 91105727.1
(22) Anmeldetag: 11.04.1991
(51) Int. Cl.: B60R 13/08, B29C 49/00

(54) **Verfahren zum Herstellen von multifunktionalen Verkleidungsteilen**
Process for the production of multifunctional lining elements
Procédé pour la réalisation des éléments de revêtement multifonction

(30) Priorität: 27.04.1990 IE 155290
(43) Veröffentlichungstag der Anmeldung: 30.10.1991
(73) Patentinhaber: H.P. Chemie Pelzer Research & Development Ltd., Tramore, County Waterford (IE)
(72) Erfinder: Casey, John, Tramore, County Waterford (IE)
(74) Vertreter: Jönsson, Hans-Peter, Dr.Dipl.-Chem.

(56) Entgegenhaltungen:
- EP-A- 0 121 947
- WO-A-82/00266
- DE-A- 3 724 680
- US-A- 2 977 639

## Beschreibung

Gegenstand der Erfindung ist ein Verfahren zum Herstellen von multifunktionalen Verkleidungsteilen z.B. in Form eines Feder-Masse-Systems bestehend aus komprimierbaren Schichten, wie z.B. Vliesen gleichen oder unterschiedlichen Materials, die infolge Behandlung in einer verschließbaren Form mittels Druck und Temperatur zwei benachbarte Bereiche unterschiedlicher Dichte aufweisen.

Verkleidungsteile der eingangs beschriebenen Art werden zum Beispiel in Kraftfahrzeugen zum Verkleiden von Wänden und Böden verwendet wobei mit dieser Verkleidung gleichzeitig eine Schalldämmung und/oder Dämpfung angestrebt wird.

Aus der EP 0 141 440 A2 ist ein Verfahren bekannt bei dem in eine zweiteilige, allseits geschlossenen Form zwei Pakete eingebracht werden von denen jedes aus einer Schicht aus Vorpolymerisat-Fasern bedeckt mit einer Folie besteht wobei die Pakete mit ihren mit den Folie bedeckten Seiten einander zugekehrt liegen, zwischen den Folien ein schallabsorbierendes Material eingefügt wird und von der Seite her in das schallabsorbierende Material unter Druck ein gegebenenfalls erhitzter Gasstrom eingeleitet wird der bewirkt, daß sich die eingebrachten Pakete der Form anpassen, die Folien vollständig zum Schmelzen gebracht werden und die vollständige Polymerisation der Schichten aus Fasermaterial erfolgt. Das so entstehende symmetrische Gebilde erreicht eine ähnliche Wirkung wie die erfindungsgemäße Lösung mit einer Quasiverdoppelung des Materialsaufwandes,erhöhtem Arbeitsaufwand und vergrößertem Flächengewicht.Gerade diese Effekte sind im modernen Fahrzeugbau unerwünscht.

Der Erfindung liegt die Aufgabe zugrunde, ein Verfahren anzugeben bei dem aus weitgehend homogenem Material in einem Arbeitsgang ein zur Schalldämmung und Dämpfung geeignetes Feder-Masse-System der eingangs beschriebenen Art erzeugt wird welches bei geringem Gewicht und minimalem Materialaufwand die Herstellung eines mehrfunktionalen Teiles bestehend aus Träger, fertigkaschierter oder beschichteter Sichtseite und Absorberelement besteht und nach der Fertigstellung Schichten unterschiedlicher Dichte besitzt.

Die Lösung dieser Aufgabe erfolgt erfindungsgemäß dadurch, daß in eine Form zwei Vliese des oder der Materialien mit etwa gleicher Dichte wobei das zu verdichtende Vlies mit einem wärmehärtbaren Bindemittel versehen ist sowie unter Zwischenfügung einer gasdichten, aus einer selbstklebenden oder mit Klebstoff beschichteten Folie bestehenden Sperrschicht eingelegt werden und die unterschiedliche Dichte durch Beaufschlagen mit Gas oder Dampf unter Überdruck von einer Seite her etwa senkrecht zur Sperrschicht eingestellt wird, wobei die Wärmezufuhr über die Form und/oder durch erhitztes Gas oder Dampf erfolgt.

Im Laufe des erfindungsgemäßen Verfahrens wirkt der Überdruck auf die Sperrschicht ein und verschiebt diese in Richtung seiner Einwirkung, sodaß sich das in Richtung des Überdruckes hinter der Sperrschicht befindliche Vlies verdichtet während das davor liegende Vlies gedehnt wird.

Es können auf diese Weise in einem Arbeitsgang unterschiedliche Dichten im Verhältnis etwa 1 : 5 eingestellt werden.

Bei Verwendung von gasdichten Sperrschichten ist es auch möglich, in einem ersten Verfahrensschritt das Verfahren nur über einen Bruchteil der Zeit unter Druck durchzuführen, z. B. 6 bar für eine Minute, dann aber ohne Druck eine weitere Minute durch die Erhitzung eine Aushärtung der komprimierten Lage durchzuführen.

Die Sperrschicht besteht mit besonderem Vorteil aus einem thermoplastischen Material mit einer Schichtdicke zwischen 20 und 150 µm oder aus selbstklebenden oder in bekannter Weise mit Klebstoff beschichteten Folien. Dabei richtet sich die Dicke nach der Höhe des Überdrucks und der Temperatur und ist umso höher je höher diese beiden Parameter sind. Die Verwendung von PE als Material für die Sperrschicht empfiehlt sich weil damit die geforderten Eigenschaften preiswert realisierbar sind.

Für bestimmte Verwendungszwecke kann es vorteilhaft sein, wenn an dem fertigen Verkleidungsteil die Sperrschicht perforiert ist. Dies ist zum Beispiel dann der Fall, wenn das Verkleidungsteil als Kfz-Himmel verwendet werden soll, wo eine hohe Schallabsorption erwünscht ist. Wird das Verkleidungsteil dagegen an der Trennwand zum Motorraum eingesetzt, so erfordert dies eine hohe Schallisolation und damit eine nicht perforierte Sperrschicht.

In Weiterbildung des erfindungsgemäßen Verfahrens wird eine Perforation der Sperrschicht dadurch bewirkt, daß die Erhitzung mit so hoher Temperatur und/oder so lange erfolgt, daß die Sperrschicht unter Bildung von Löchern zu schmelzen beginnt mit einem Lochanteil von mindestens 30% der Oberfläche. Dabei bleibt die Wirkung des erfindungsgemäßen Verfahrens auf die Dichte der Vliese unberührt. Für diesForm des Verfahrens eignet sich besonders die Verwendung von Polyäthylen. Dieses Verfahren ist weniger aufwendig als die an sich mögliche nachträgliche mechanische Perforation.

Wenn Verkleidungsteile an Metallflächen angebracht werden sollen an denen es zu Bildung von innenliegendem Schwitzwasser kommen kann, das möglichst in kurzer Zeit unter Erwärmung entfernt werden soll, so kann in einer weiteren Ausführungsform der Erfindung eine Sperrschicht verwendet werden, deren Material wasserdampfdurchlässig ist, mindestens aber nur geringen Widerstand gegen Wasserdampfdiffusion aufweist. Dies hat den weiteren Vorteil, daß bei Erhitzen mittels heißen Wasserdampf von diesem auch die komprimierte Lage beeinflußt und deren Aushärtung beschleunigt wird.

Um zu vermeiden, daß nach der Herstellung durch eine Rückstellwirkung in der Schicht höherer Dichte das Dichteverhältnis vermindert wird, wird das zu verdichtende Vlies mit einem in der Wärme wirksamen Bindemittel versehen welches während des thermisch unterstützten Preßvorganges in bekannter Weise aushärtet.

Je nach der vorgesehen Verwendung des Verkleidungsteiles kann die der Sperrschicht abgewandte Seite des zu verdichtenden Vliese mit einem Stoff kaschiert werden, der mit dem verdichteten Vlies z.B durch Verkleben fest verbunden wird.

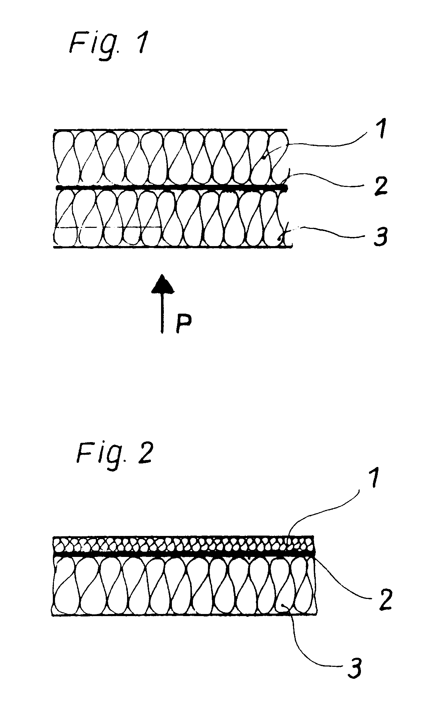

Das erfindungsgemäße Verfahren wird anhand der Figuren näher erläutert, wobei auf die Darstellung der Form verzichtet wird. In der Figur 1 ist das obere, zu verdichtende Vlies mit 1 bezeichnet es ist durch die Sperrschicht 2 von dem unteren Vlies 3 getrennt auf das in Richtung des Pfeiles P ein Druck ausgeübt wird. In der Figur 2 erkennt man, daß das obere Vlies 1 stark verdichtet ist während das unter der Sperrschicht 2 befindliche untere Vlies 3 gedehnt ist. So entsteht ein Feder-Masse-System mit dem Vlies 3 als Feder und dem Vlies 1 als Masse.

## Patentansprüche

1. Verfahren zum Herstellen von multifunktionalen Verkleidungsteilen z.B.in Form eines Feder-Masse-Systems bestehend aus komprimierbaren Schichten, wie z.B. Vliesen (1,3) gleichen oder unterschiedlichen Materials, die infolge Behandlung in einer verschließbaren Form mittels Druck und Temperatur mindestens zwei benachbarte Bereiche unterschiedlicher Dichte aufweisen,
**dadurch gekennzeichnet**,
daß in die Form zwei Vliese (1,3) als komprimierbare Schichten des oder der Materialien mit etwa gleicher Dichte, wobei das zu verdichtende Vlies (1) mit einem wärmehärtbaren Bindmittel versehen ist
sowie unter Zwischenfügung einer gasdichten, aus einer selbstklebenden oder mit Klebstoff beschichteten Folie bestehenden Sperrschicht (2) eingelegt
und die unterschiedliche Dichte durch Beaufschlagen mit Gas oder Dampf unter Überdruck von einer Seite her etwa senkrecht zur Sperrschicht (2) eingestellt wird, wobei die Wärmezufuhr über die Form und/oder durch erhitztes Gas oder Dampf erfolgt.

2. Verfahren nach Anspruch 1,
**dadurch gekennzeichnet**,
daß die Sperrschicht (2) aus PE einer Stärke zwischen 20 und 150 µm besteht.

3. Verfahren nach Anspruch 1,
**dadurch gekennzeichnet**,
daß eine Sperrschicht (2) aus einem Material verwendet wird, das wasserdampfdurchlässig ist, mindestens aber nur geringen Widerstand gegen Wasserdampfdiffusion aufweist.

4. Verfahren nach Anspruch 1 oder 2,
**dadurch gekennzeichnet**,
daß die Erhitzung mit so hoher Temperatur und/oder so lange erfolgt, daß die Sperrschicht (2) unter Bildung von Löchern zu schmelzen beginnt mit einem Lochanteil von mindestens 30% der Oberfläche.

5. Verfahren nach Anspruch 1 oder 2,
**dadurch gekennzeichnet**,
daß die der Sperrschicht (2) abgewandte Seite des zu verdichtenden Vlieses (1) mit einem Stoff kaschiert ist, der mit dem verdichteten Vlies (1) im Laufe des Verfahrens fest verbunden wird.

## Claims

1. Process for producing multifunctional cladding parts, for example in the form of a spring-mass system, which comprise compressible layers, such as, for example, non-woven fabrics (1, 3) made of the same or different materials, which as a result of treatment by means of pressure and temperature in a closable mould have at least two adjacent regions of different density, characterized in that two non-woven fabrics (1, 3), as compressible layers of the material or materials having approximately the same density, are inserted into the mould, the non-woven fabric (1) to be compressed being provided with a heat-curable binder, and with the inter-position of a gas-impermeable barrier layer (2) comprising a film which is self-adhesive or coated with adhesive and the different density is adjusted by the action of gas or steam under superatmospheric pressure, from one side, approximately perpendicular to the barrier layer (2), the heat supply taking place via the mould and/or by means of heated gas or steam.

2. Process according to Claim 1, characterized in that the barrier layer (2) comprises PE with a thickness between 20 and 150 µm.

3. Process according to Claim 1, characterized in that a barrier layer (2) is used which comprises a material which is water-vapour-permeable, or at least has only low resistance to water-vapour diffusion.

4. Process according to Claim 1 or 2, characterized in that the heating takes place at such a high temperature and/or for so long that the barrier layer (2) begins to melt with the formation of holes, with a hole proportion of at least 30% of the surface area.

5. Process according to Claim 1 or 2, characterized in that the side, facing away from the barrier layer (2), of the non-woven fabric (1) to be compressed is laminated with a fabric which is firmly bonded to the compressed non-woven fabric (1) in the course of the process.

## Revendications

1. Procédé de fabrication de pièces de garniture multifonctionnelles, par exemple sous la forme d'un système masse-élasticité, constitué de couches compressible, par exemple des nappes (1, 3) faites d'un même matériau ou de matériaux différents et qui ont été soumises dans un moule susceptible d'être fermé par la chaleur et par la pression de manière à présenter au moins deux zones voisines de densités différentes, caractérisé en ce qu'on introduit dans le moule, deux nappes (1, 3) constituant des couches compressibles de densités égales, faites d'un matériau unique ou de matériaux différents, la nappe (1) à compacter étant garnie d'un liant durcissable à chaud, en intercalant entre les couches une feuille auto-adhésive ou une feuille garnie d'une couche d'adhésif constituant couche d'arrêt (2) et on obtient les différences de densité en réglant l'action de gaz ou de vapeur sous pression introduit à partir d'un côté, perpendiculairement à la couche d'arrêt (2), l'apport de chaleur étant assuré par le moule et/ou par le gaz chauffé ou la vapeur.

2. Procédé selon la revendication 1, caractérise en ce que la couche d'arrêt est du polyéthylène d'une épaisseur comprise entre 20 et 150 microns.

3. Procédé selon la revendication 1, en ce qu'on utilise pour réaliser la couche d'arrêt un matériau perméable à la vapeur d'eau ou présentant au moins une faible résistance à la diffusion de la vapeur d'eau.

4. Procédé selon la revendication 1 ou 2, caractérisé en ce que le chauffage est réalisé, en température et/ou en durée, de manière que la couche d'arrêt (2) commence a fondre avec création de petits trous représentant au moins 30 % de la surface totale.

5. Procédé selon la revendication 1 ou 2, caractérisé en ce la couche d'arrêt (2), sur sa face en regard de la nappe à compacter (1), est équipée d'une couche contreplaquée qui, au cours de l'opération, se solidarise avec la nappe à compacter (1).
